# EUROPEAN PATENT APPLICATION

(11) **EP 1 059 161 A2**
(43) Date of publication of application: **13.12.2000**
(21) Application number: 99123354.5
(22) Date of filing: 23.11.1999
(51) Int. Cl.: B32B 17/10, B60J 1/00, C03C 27/12

(54) **Crystal for windows of vehicles**

(30) Priority: 09.06.1999 IT MI991283
(71) Applicant: Di Stefano, Francesco, 20070 Dresano (Milano) (IT)
(72) Inventor: Di Stefano, Francesco, 20070 Dresano (Milano) (IT)
(74) Representative: Lecce, Giovanni

(57) **Abstract**

A crystal (10) for windows of vehicles (20), particularly suitable to constitute a windshield of motor-cars, comprises at least one first (12) and one second (14) glass pane, both of them having a like size, coupled to one another with the interposition of a layer (16) constituted by at least one film from thermoplastic resin and forming as a whole a stratified crystal (18), and at least one third glass pane (22) integral with said stratified crystal (18) having a size smaller than that of said stratified crystal (18). A layer constituted by at least a film and preferably two films from thermoplastic resin is inserted between the third pane (22) and the stratified crystal (18).

## Description

The present invention relates to a crystal for windows of vehicles.

More particularly, the present invention relates to a crystal especially suitable to be used on motor-cars as a transparent and protective shield integrated in the body.

The term crystal, as used in the present description and in the claims, comprises any artifact from glass or transparent material, necessary and/or functional, suitable to be applied to a vehicle to close an aperture of the body.

In its main embodiment, the crystal of the present invention has a particular application as a shaped pane that constitutes the windshield, i.e. a transparent panel that closes or shields the front of a motor-car.

As is known, motor-cars comprise a body that is provided, in its upper part, with windows with housing seats for glasses or crystals obtained from different materials, that close either in a stable manner or with the possibility of being opened, the different spaces.

Said motor-cars are provided, along the side walls and in some cases also on the roof, with openable shields, formed by panes from glass or transparent plastic material and, in correspondence of the front, with a pane stably fixed to the body, which is commonly called windshield.

According to the vehicle configuration, the windshield has specific characteristics as concerns size, form and shaping and is so applied as to ensure the tightness that excludes air or water infiltration into the inside. In the part corresponding to said application, the vehicle body is provided with an adequate positioning seat of the windshield; gaskets and/or peripheral adhesives provide to the stabilization of said windshield.

The conventional windshields that come with the motor-cars, trucks and the like are constituted, in general, by two superposed heat-shaped glass panes, between which a thin film from plastic material is superposed. Said film, having a thickness comprised between 0.5 and 1.0 mm, is generally constituted by a thermoplastic resin, preferably polyvinylbutyrale, which causes the two panes to be integral to one another, forming at the same time an elastic layer that strengthens the windshield. However, the so obtained shock-resistance of the windshield is limited, as the thickness of the two glass panes coupled to each other is of only a few millimeters. Therefore, following strong stresses, the windshield shatters, endangering the safety of the driver and the passenger at his side. This problem is at present particularly realized because of the repeated and inconsiderate vandalic acts made to the damage of motorists, and consisting in the throwing of stones and blunt objects from overpasses.

In order to overcome this drawback, the known art applies to motor-cars extremely resistant windshields, even bullet-proof. The windshields of this type are utilized for special armored vehicles, intended for instance for the transportation of valuables. However, they involve specific and relevant interventions on the body, to form an adequate positioning seat. Armored or anti-breaking windshields have, in fact, a remarkable thickness which may reach several centimeters, and are also very heavy. The adaptation of such a windshield to a mass-produced vehicle involves therefore radical changes in the body, with extremely high costs.

Another known solution provides for the realization of reinforced windshields, i.e. windshields constituted by coupling three glass panes alternated with a film from plastic material of the type indicated above.

However, also this solution has severe drawbacks associated especially to the assembly of the windshield to the body. The three glass panes that form the windshield have the same size and are, as a consequence, entirely superposed to each other. The thickness of the reinforced artifact is therefore greater than that of a normal mass-produced windshield on all the surface, edge comprised. Hence, also with this reinforced windshield, the vehicles must be subjected to important interventions on the body, in order to house the reinforced windshield. Moreover, the changes in the body give rise easily to unaesthetic results, as they unavoidably alter the original structure.

Object of this invention is to obviate the aforementioned drawbacks.

More particularly, object of this invention is to realize a crystal for windows of vehicles, in particular a windshield, that has high strength characteristics and that can be applied in a quick and easy manner to the vehicles without the need of operating on the body.

Another object of the invention is to realize a windshield suitable to be used to replace the existing one, without making any change in the original structure of the vehicle.

A further object of the invention is to provide a windshield suitable to ensure a high level of reliability in the time, and also such as to be easily and economically realized.

According to the present invention, these and still other objects, which will be clarified by the following description, are achieved by a crystal comprising a plurality of glass panes coupled to each other by means of the interposition of a layer constituted by at least one film from thermoplastic material, wherein at least one of said panes has a smaller size compared to the one of the remaining panes, so as to form a lower edge at least along a part of the crystal assembly peripheral zone.

In particular, the crystal for windows of vehicles of the present invention comprises: at least one first and one second glass pane, having the same size and being coupled to each other with the interposition of a layer constituted by at least one film from thermoplastic resin, so as to form as a whole a stratified crystal, and at least one third glass pane, integral with the stratified crystal and having a size smaller than that of each of the two coupled panes.

The size of the third pane is smaller than that of each of the two coupled panes, so as to form a lowering along at least a part of the assembly peripheral zones of the crystal of the present invention; therefore, said lowering has a thickness equal to that of the stratified crystal formed by the first and the second pane.

The layer interposed between at least the first and the second glass layer is preferably constituted by two films from thermoplastic resin, such as for instance polyvinylbutyrale.

Besides, at least one film and preferably two films from thermoplastic resin, for instance of the aforementioned type, are interposed between the stratified crystal and the glass pane or panes having a smaller size or extension.

The constructive and functional characteristics of the crystal for windows of vehicles of the present invention shall be better understood thanks to the following description, wherein reference is made to the attached drawings that represent a preferred non limiting embodiment, and wherein:
Figure 1 is a schematic perspective view of the inner front of the crystal for windows of vehicles of the present invention;
Figure 2 is a schematic view of an enlarged section of the crystal of Figure 1, taken along a plane passing along line II-II of said Figure 1;
Figure 3 is a partly sectioned schematic perspective view of a part of a motor-car provided with said crystal.

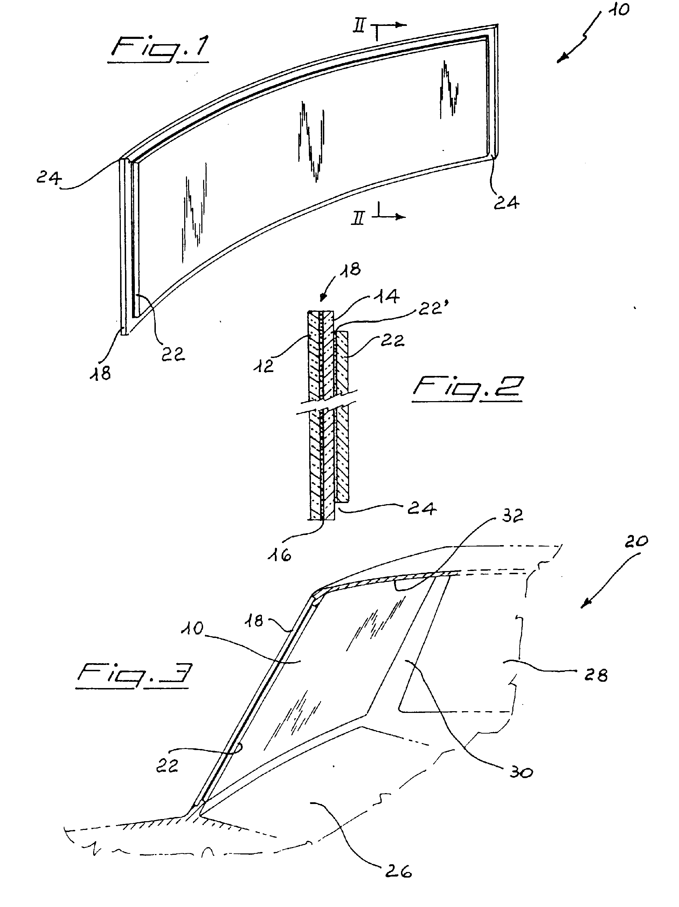

With reference to the above figures, the crystal for windows of motor-cars, or windshield, of the present invention, indicated as a whole by 10 in Figure 1, is constituted by the coupling of a plurality of glass panes, wherein at least one of them has a smaller size compared to the other ones.

In particular, at least one first pane 12 and one second pane 14 are coupled to each other with interposition of at least one and preferably two films 16 from thermoplastic resin or other suitable material, so as to form a lamination or stratified crystal indicated in detail by 18 in Figure 2 and as a whole in Figures 1 and 3.

The stratified crystal 18 has a shape and size such as to allow its exact positioning in the peripheral seat conventionally obtained in the body of a motor-car, a part of which is indicated by 20 in Figure 3.

According to the invention, the crystal for windows or windshield 10 comprises at least one third glass pane 22, integral with the stratified crystal 18 and having the same shaped conformation, in particular the convexity, if any.

Between said at least one third pane 22 and the stratified crystal 18, at least a film 22', preferably two films, made from thermoplastic resin similar to that interposed between the first 12 and the second pane 14, is interposed at the time of the formation of the windshield as a whole.

Pane 22, preferably integral with the inner front of the stratified crystal 18, i.e. with the surface facing the inside of the motor-car 20, has a smaller extension compared to said crystal. Its development, in fact, is such as to define in the so obtained windshield 10 a peripheral lowering 24, whose extension and configuration may vary according to the type of motor-car 20. In practice, the peripheral lowering 24 constitutes the inner edge of windshield 10, suitable to match, during the assembly, the seat provided in the body of the motor-car 20.

Following such assembly, realized with conventional adhesives and/or gaskets, the third additional pane 22 of windshield 10 protrudes towards the inside of the motor-car 20. Because of the limited thickness of said additional pane, comprised, by way of example, between 1.2 and 3.5 mm, to which the thickness of film 22', generally comprised between 0.5 and 1.0 mm, must be added, said pane 22 can easily abut in the opening of the body, without interfering with the covering side uprights, the dashboard or the inner covering of the roof panel.

Figure 3 shows schematically the arrangement of windshield 10 coupled to the body of the vehicle 20, whose dashboard is indicated by 26, the front side window by 28, a side upright by 30 and the roof panel, i.e. the inner front of the roof facing the inside of the motor-car, by 32.

As an alternative, the third pane (22) may be fixed to the external front of the stratified crystal (18), i.e. the side facing the outside of the motor-car.

Depending on the internal body elements, e.g. the dashboard 26, the peripheral lowering 24 of dashboard 10 may be possibly extended, to a greater or lesser extent, only into some parts of the assembly peripheral zone; in this case, the concerned conventional size arrangements correlated to the type of motor-car, are defined during the design step, in the same way as the development and conformation of the traditionally realized windshields.

However, to prevent any possibility of interference of the additional pane 22 of windshield 10 with internal components of the body of motor-car 20, the edge of said pane may be rounded off at a suitable angle along the whole perimeter or part of the same.

As can be inferred from the above description, the advantages achieved by the invention are obvious.

The crystal for windows of motor-cars or windshield 10 of the present invention is substantially reinforced thanks to the presence of at least one third glass pane 22 and at least one film 22' from thermoplastic resin interposed between said pane and the stratified crystal 18.

The application of the so structured windshield 10 to motor-cars 20 does not involve the need of interventions, however marginal, on the body of said motor-cars, as the thickness increase created by the additional pane 22 does not has any consequence on the peripheral fixing zones of said windshield.

However, the invention, as described hereinabove and claimed hereinfter, has been proposed only by way of non limiting example, meaning that the same is susceptible of modifications and variants, all of them falling within the scope of the inventive concept.

For instance, windshield 10 may comprise several additional panes 22 superposed to each other, always of a smaller size, having any thickness, and/or a like pane on the opposed external front, with lowering 24 extended along all the perimeter or part of the same.

Besides, with the same structure crystals may be realized that are intended for the application along other parts of the body of motor-cars 20, to form, for instance, the back window of the transparent covering panel of openable roofs. In this last application, the panel may be also made from enbloc plastic material.

## Claims

1. A crystal (10) for windows of motor-cars (20), particularly suitable to constitute a windshield of motor-cars, comprising a plurality of glass panes (12, 14, 22) coupled to each other with the interposition of a layer (16) constituted by at least one film from thermoplastic material, characterized in that at least one (22) of said panes has a size smaller with respect to the remaining panes, so as to form a lowering (24) at least along a part of the crystal assembly peripheral zone; wherein said lowering has a thickness equal to that of the remaining panes (12, 14).

2. The crystal for windows according to claim 1, comprising at least one first (12) and one second (24) glass panes, having an equal size and being coupled to each other with the interposition of a layer (16) constituted by at least one film from thermoplastic resin, so as to form as a whole a stratified crystal (18), characterized in that at least one third glass pane (22), having a size smaller than that of each of the two coupled panes (12, 14), is fixed to the stratified crystal (18).

3. The crystal for windows according to claim 1 or 2, characterized in that between said at least one third pane (22) and the stratified crystal (18) a layer (22') is interposed, constituted by at least one film from thermoplastic material.

4. The crystal for windows according to claim 3, wherein layer (22') interposed between at least one third pane (22) and the stratified crystal (18) is constituted by two films from thermoplastic material.

5. The crystal for windows according to any of the preceding claims, characterized in that the extension of the lowering (24) is constant.

6. The crystal for windows according to any of the preceding claims 1-5, characterized in that the extension of the lowering (24) is diversified in one or more zones of its perimeter.

7. The crystal for windows according to any of the preceding claims, characterized in that the edge of said at least one third pane (22) is rounded off along at least a part and preferably along the whole perimeter.

8. The crystal for windows according to any of the preceding claims, characterized in that the thickness of said at least one third pane (22) is comprised between 1.2 and 3.5 mm.

9. The crystal for windows according to any of the preceding claims, characterized in that said at least one third pane (22) is integral with the internal front of the stratified crystal (18) facing the inside of the motor-car (20).

10. The crystal for windows according to any of the preceding claims, characterized in that said at least one third pane (22) is integral with the external front of the stratified crystal (18) facing the outside of the motor-car (20).
